# EUROPEAN PATENT APPLICATION

(11) **EP 2 280 587 A2**
(43) Date of publication of application: **02.02.2011**
(21) Application number: 10154780.0
(22) Date of filing: 26.02.2010
(51) Int. Cl.: H05B 37/02

(54) **Lighting system and control method thereof**

(30) Priority: 31.07.2009 TW 98125799
(71) Applicant: Everlight Electronics Co., Ltd., Tucheng 236 T'ai pei (TW)
(72) Inventor: Lin, Ying-Chu, Taipei (TW); Hung, Yu-Wen, Taipei (TW)
(74) Representative: Becker Kurig Straus

(57) **Abstract**

A lighting system is provided. The lighting system includes a plurality of lamp modules connected in series, wherein each of the lamp modules includes a decoder and a lamp. When a first lamp module of the lamp modules receives a trigger signal, a first decoder of the first lamp module configures a first identification code for a first lamp of the first lamp module, and provides a configuring signal to a second decoder of a second lamp module of the lamp modules to configure a second identification code for a second lamp of the second lamp module. The second lamp module is a next lamp module following the first lamp module.

## Description

### CROSS REFERENCE TO RELATED APPLICATIONS

This Application claims priority of Taiwan Patent Application No. 098125799, filed on July 31, 2009, the entirety of which is incorporated by reference herein.

### BACKGROUND OF THE INVENTION

### Field of the Invention

The invention relates to a lighting system, and more particularly to a lighting system which automatically configures identification (ID) codes.

### Description of the Related Art

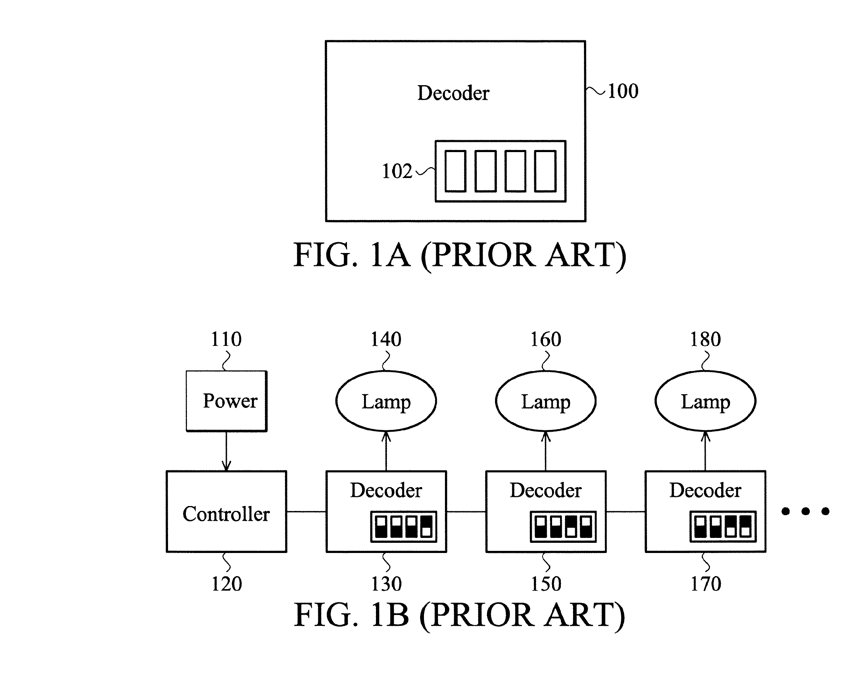

FIG. 1A shows a schematic illustrating a conventional decoder 100 which uses a DIP switch 120 to set an ID code for a lamp. The DIP switch 120 is disposed in the decoder 100 such that a user can use the DIP switch 120 to set an ID code for a lamp corresponding to the decoder 100. Therefore, if a lighting system has a plurality of lamps, the user must set a respective ID code to a respective decoder via the DIP switch therein for each of the lamps in advance. After the ID codes of the lamps are set, the user connects the decoders in series and then couples each lamp to the corresponding decoder, as shown in FIG. 1B. FIG. 1B shows a conventional lighting system which uses the DIP switches to set ID codes for various lamps. First, a user sets a first ID code (ex. "0001") for a decoder 130 through the DIP switch of the decoder 130. Next, the user sets a second ID code (ex. "0010") for a decoder 150 through the DIP switch therein. Next, the user sets a third ID code (ex. "0011") for a decoder 170 through the DIP switch therein. Next, the decoders 130, 150 and 170 are connected in series. Next, the lamps 140, 160 and 180 are respectively connected to the decoders 130, 150 and 170. Next, a power 110 is coupled to a controller 120 and then the controller 120 is coupled to the decoder 130, so as to control the lamps 140, 160 and 180 through the decoders 130, 150 and 170, respectively. Because the user must set individual ID codes for each decoder, time required for setting up the lighting system is long.

Therefore, a lighting system which is able to automatically configure identification codes (IDs) is desired to decrease time required for setting up the lighting system.

### BRIEF SUMMARY OF THE INVENTION

A lighting system and a control method thereof are provided. An exemplary embodiment of a lighting system comprises a plurality of lamp modules connected in series, each comprising a decoder and a lamp. When a first lamp module of the lamp modules receives a trigger signal, a first decoder of the first lamp module configures a first identification code for a first lamp of the first lamp module, and provides a configuring signal to a second decoder of a second lamp module of the lamp modules to configure a second identification code for a second lamp of the second lamp module. The second lamp module is a next lamp module following the first lamp module.

Furthermore, an exemplary embodiment of a control method for a lighting system with a plurality of lamp modules connected in series is provided. A trigger signal is received via a specific lamp module of the lamp modules. A first identification code is configured for the specific lamp module and a configuring signal is provided to a next lamp module of the specific lamp module to configure an identification code for the next lamp module when the trigger signal is received. The first identification code corresponds to a lamp of the specific lamp module.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:

FIG. 1A shows a schematic illustrating a conventional decoder which uses a DIP switch to set an ID code for a lamp;

FIG. 1B shows a conventional lighting system which uses the DIP switches to set ID codes for various lamps;

FIG. 2 shows a schematic illustrating a lighting system according to an embodiment of the invention;

FIG. 3 shows a schematic illustrating a scheme for controlling a lighting system with a plurality of lamp modules according to an embodiment of the invention;

FIG. 4 shows a schematic illustrating a decoder according to an embodiment of the invention;

FIG. 5 shows a schematic illustrating a plurality of lamp modules which are connected in series to form a loop; and

FIG. 6 shows a control method for a lighting system according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

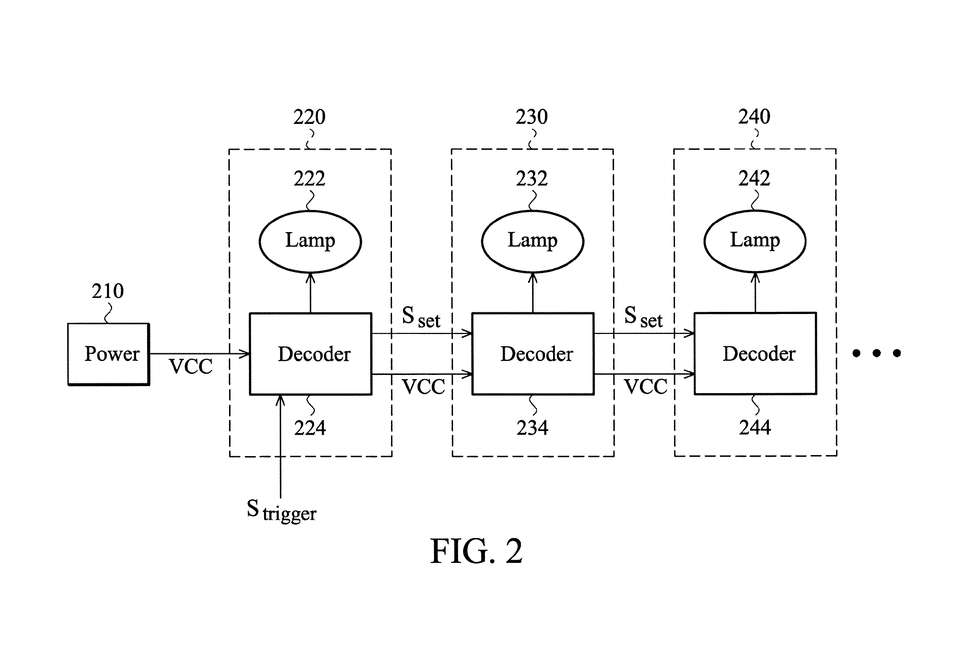

FIG. 2 shows a schematic illustrating a lighting system according to an embodiment of the invention, wherein the lighting system is able to automatically configure different identification (ID) codes to the lamp modules thereof. In FIG. 2, the lamp modules 220, 230 and 240 are connected in series, wherein the lamp module 230 is a next lamp module of the lamp module 220 and the lamp module 240 is a next lamp module of the lamp module 230. A power supply 210 is coupled to the lamp module 220, which is used to provide an operating voltage VCC to each of the lamp modules. In addition, each of the lamp modules comprises a lamp and a decoder. For example, the lamp module 220 comprises a lamp 222 and a decoder 224 coupled to the lamp 222. When receiving a trigger signal S_{trigger}, the decoder 224 configures a first ID code (ex. "1") for the lamp 222.
Next, the decoder 224 of the lamp module 220 provides a configuring signal Sₛₑₜ to the decoder 234 of the lamp module 230, so as to configure a second ID code (ex. "2") for the lamp 232. Next, the decoder 234 of the lamp module 230 transmits the configuring signal Sₛₑₜ to the decoder 244 of the lamp module 240 to configure a third ID code (ex. "3") for the lamp 242, and so on. Therefore, the lamp modules connected in series may configure all ID codes in sequence. In one embodiment, the ID codes are progressively increased, and each ID code comprises a respective protocol address, such as an Internet Protocol (IP) protocol address or other communication protocol addresses.

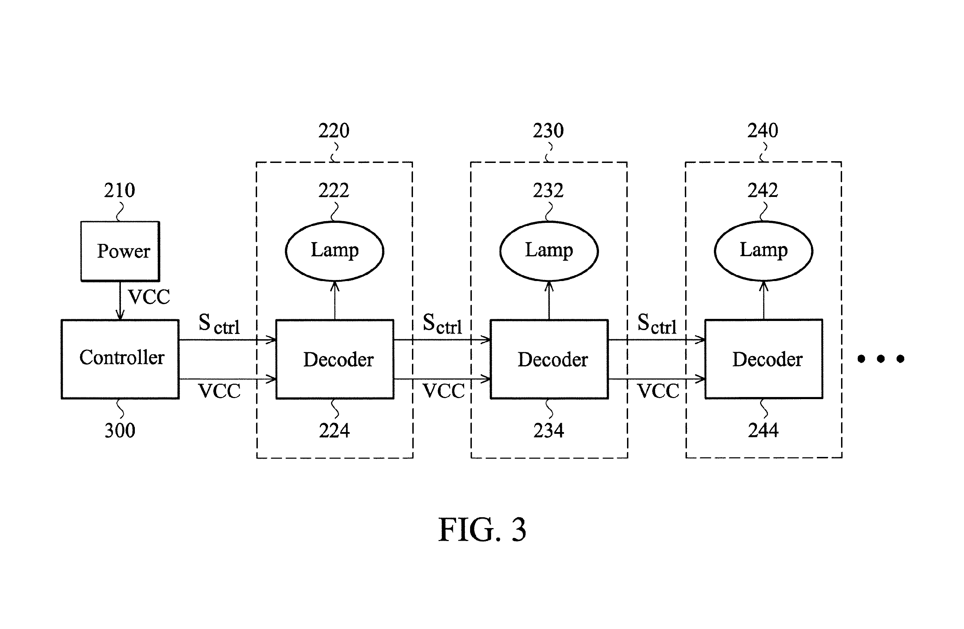

FIG. 3 shows a schematic illustrating a scheme for controlling a lighting system with a plurality of lamp modules according to an embodiment of the invention. As described in FIG. 2, a controller 300 is disposed between the power supply 210 and the lamp module 220. When configuring of the ID codes is completed, the controller 300 provides a control signal S_{ctrl} to each lamp module, so as to set brightness of a lamp within each of the lamp modules. For example, when the lamp module 220 receives the control signal S_{ctrl}, the decoder 224 decodes the control signal S_{ctrl} according to the first ID code to obtain data/information corresponding to the lamp 222, such as brightness information. Simultaneously, the decoder 224 also transmits the control signal S_{ctrl} to the lamp module 230. Next, when the lamp module 230 receives the control signal S_{ctrl}, the decoder 234 decodes the control signal S_{ctrl} according to the second ID code to obtain data/information corresponding to the lamp 232 and then the decoder 234 transmits the control signal S_{ctrl} to the lamp module 240, and so on. Therefore, the lamp modules connected in series may decode the control signal S_{ctrl} according to the corresponding ID codes to obtain the corresponding data/information in sequence. In addition, the controller 300 may also control the lamp modules disposed in different series paths. Furthermore, the lamp modules 220, 230 and 240 may automatically configure different ID codes to the lamps thereof according to the trigger signal S_{trigger} when the controller 300 is coupled between the power supply 210 and the lamp module 220.

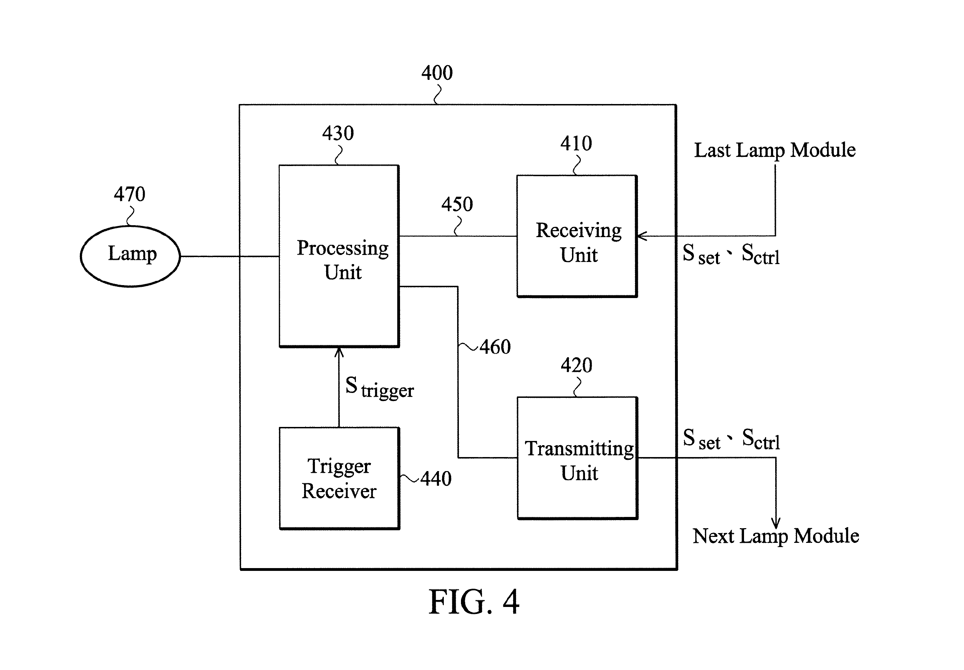

FIG. 4 shows a schematic illustrating a decoder 400 according to an embodiment of the invention. The decoder 400 comprises a receiving unit 410, a transmitting unit 420 and a processing unit 430. The receiving unit 410 is coupled to a transmitting unit of a last lamp module and the transmitting unit 420 is coupled to a receiving unit of a next lamp module. In one embodiment, the receiving unit 410 and the transmitting unit 420 are IC 485. In the decoder 400, the receiving unit 410 is used to receive the control signal S_{ctrl} from the last lamp module, and the transmitting unit 420 is used to transmit the received control signal S_{ctrl} to the next lamp module. In addition, the receiving unit 410 transmits the configuring signal Sₛₑₜ to the processing unit 430 via a data line 450 when the configuring signal Sₛₑₜ is received by the decoder 400. Next, the processing unit 430 obtains an ID code of the last lamp module from the configuring signal Sₛₑₜ, and generates a new ID code for a lamp 470 according to the ID code of the last lamp module. For example, if the ID code of the last lamp module is "5", and then the generated new ID code would be "6". Next, the processing unit 430 updates the configuring signal Sₛₑₜ according to the generated new ID code and transmits the updated configuring signal Sₛₑₜ to the transmitting unit 420 via a data line 460. Next, the transmitting unit 420 transmits the updated configuring signal Sₛₑₜ to the next lamp module, so as to perform a subsequent ID code configuring process. In one embodiment, the decoder 400 is implemented in the lamp 470.

Furthermore, the decoder 400 further comprises a trigger receiver 440. When a trigger event is sensed by the trigger receiver 440 of the decoder 400, the trigger receiver 440 provides the trigger signal S_{tigger} to the processing unit 430, so as to configure different ID codes for various lamp modules of a lighting system. First, the processing unit 430 configures a first ID code for the lamp 470. Next, the processing unit 430 transmits the configuring signal Sₛₑₜ with the first ID code information to the transmitting unit 420 via the data line 460. Next, the transmitting unit 420 transmits the configuring signal Sₛₑₜ with the first ID code information to the next lamp module, so that a decoder of the next lamp module configures a second ID code for a lamp of the next lamp module. In the embodiment, the trigger receiver 440 may be a button, wherein the trigger signal S_{trigger} is provided to the processing unit 430 when the button is pressed by a user. In addition, the trigger receiver 440 may be a wireless receiver for receiving a remote control signal from a remote control apparatus, such as PC, PDA and so on. It is to be noted that the trigger receiver 440 is an example and does not limit the invention. The trigger receiver 440 may be other types of devices which are able to generate a trigger signal.

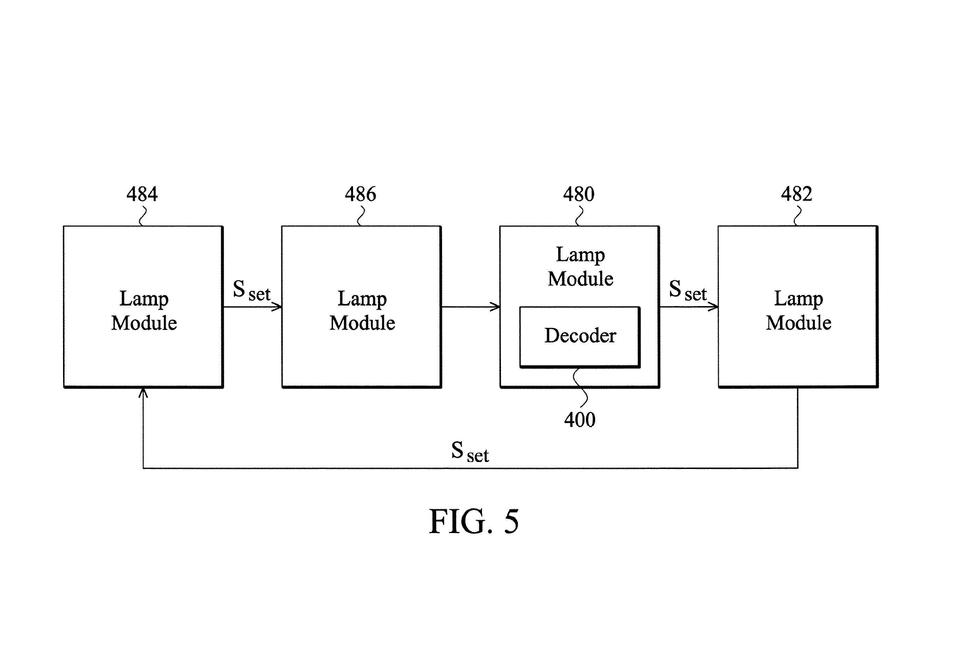

FIG. 5 shows a schematic illustrating a plurality of lamp modules which are connected in series to form a loop. Referring to FIG. 4 and FIG. 5 together, the configuring signal Sₛₑₜ of the lighting system is provided by the decoder 400 of the lamp module 480 when the lamp module 480 receives the trigger signal S_{trigger}. Therefore, an ID code of a lamp module 480 is configured as "1". Next, an ID code of a lamp module 482 is configured as "2" by the configuring signal Sₛₑₜ, wherein the lamp module 482 is a next lamp module of the lamp module 480. Next, an ID code of a lamp module 484 is configured as "3" by the configuring signal Sₛₑₜ, wherein the lamp module 484 is a next lamp module of the lamp module 482. Next, an ID code of a lamp module 486 is configured as "4" by the configuring signal Sₛₑₜ, wherein the lamp module 486 is a next lamp module of the lamp module 484. Therefore, no matter which lamp module receives the trigger signal S_{trigger}, the lamp modules disposed in the connected loop may perform the ID code configuring process until all lamp modules are configured. Furthermore, the power supply and the controller may also be connected to any lamp module of the lighting system. In one embodiment, when the lamp modules connected in series of the lighting system have completely configured ID codes according to the embodiments of the invention, the lamp modules which are used in the conventional setting method to set ID codes may be added to the end of the lamp modules connected in series.

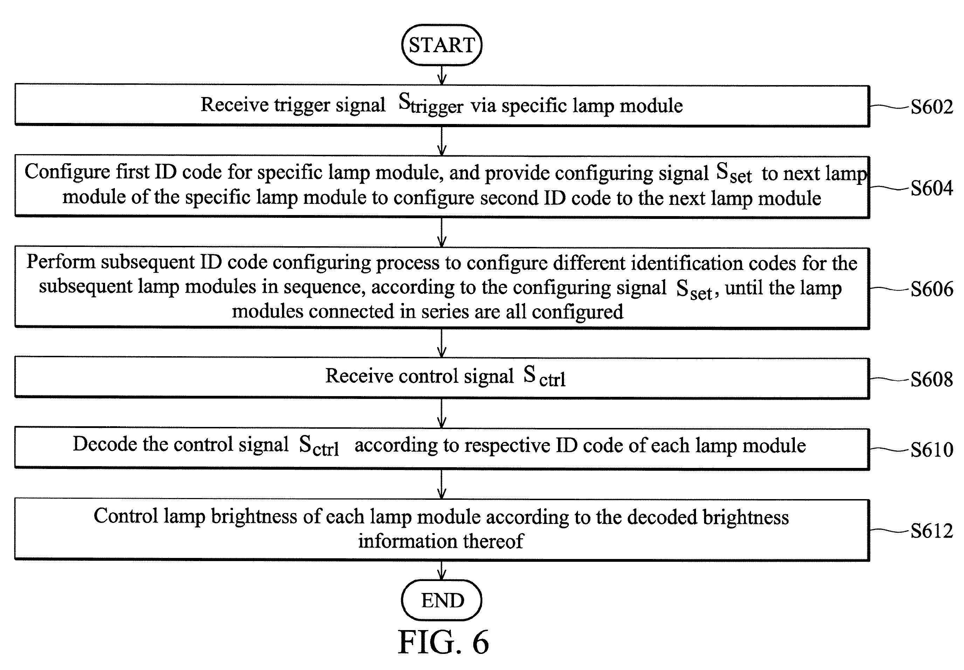

FIG. 6 shows a control method for a lighting system according to an embodiment of the invention, wherein the lighting system has a plurality of lamp modules connected in series and the ID codes for the lamp modules are automatically configured.
First, in step S602, a trigger signal S_{trigger} is received via a specific lamp module of the lamp modules. Next, in step S604, a first ID code is configured for the specific lamp module, and a configuring signal Sₛₑₜ is provided to a next lamp module of the specific lamp module to configure a second ID code to the next lamp module. Next, a subsequent ID code configuring process is performed to configure different identification codes for the subsequent lamp modules in sequence, according to the configuring signal Sₛₑₜ, until the lamp modules connected in series are all configured (step S606). Next, a control signal S_{ctrl} is received (step S608), and the control signal S_{ctrl} is decoded according to the respective ID codes of each lamp module (step S610), so as to obtain the brightness information corresponding to each lamp module. For example, the control signal S_{ctrl} is decoded according to the first ID code, so that the brightness information corresponding to the specific lamp module is obtained, and the control signal S_{ctrl} is decoded according to the second ID code to obtain the brightness information corresponding to the next lamp module. Next, in step S612, lamp brightness of each lamp module is controlled according to the decoded brightness information thereof.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A lighting system, comprising:
a plurality of lamp modules connected in series, each comprising a decoder
and a lamp,
wherein when a first lamp module of the lamp modules receives a trigger
signal, a first decoder of the first lamp module configures a first identification code for a first lamp of the first lamp module, and provides a configuring signal to a second decoder of a second lamp module of the lamp modules to configure a second identification code for a second lamp of the second lamp module, and
wherein the second lamp module is a next lamp module following the first
lamp module.

2. The lighting system as claimed in claim 1, further comprising: a power supply coupled to a third lamp module of the lamp modules,
providing an operating voltage to the lamp modules.

3. The lighting system as claimed in claim 2, wherein the third lamp module is any one of the lamp modules.

4. The lighting system as claimed in claim 2, further comprising:
a controller coupled between the power supply and the third lamp module, providing a control signal to the lamp modules to set brightness for the lamp of each of the lamp modules.

5. The lighting system as claimed in claim 4, wherein when the first lamp module receives the control signal, the first decoder decodes the control signal according to the first identification code to obtain a brightness information corresponding to the first lamp, and transmits the control signal to the second lamp module.

6. The lighting system as claimed in claim 5, wherein when the second lamp module receives the control signal, the second decoder decodes the control signal according to the second identification code to obtain a brightness information corresponding to the second lamp, and transmits the control signal to a next lamp module of the second lamp module.

7. The lighting system as claimed in claim 1, wherein the lamp modules are connected in series to form a loop.

8. The lighting system as claimed in claim 1, wherein the decoder of each of the lamp modules comprises:
a receiving unit coupled to a last lamp module, receiving the configuring signal from the last lamp module; and
a transmitting unit coupled to a next lamp module, transmitting the configuring signal to the next lamp module.

9. The lighting system as claimed in claim 1, wherein the decoder of each of the lamp modules comprises:
a button, providing the trigger signal to the first lamp module.

10. The lighting system as claimed in claim 1, wherein the first and second identification codes comprise different protocol addresses.

11. A control method for a lighting system with a plurality of lamp modules connected in series, comprising:
receiving a trigger signal via a specific lamp module of the lamp modules; and
configuring a first identification code for the specific lamp module and providing a configuring signal to a next lamp module of the specific lamp module to configure an identification code for the next lamp module when the trigger signal is received,
wherein the first identification code corresponds to a lamp of the specific lamp module.

12. The control method as claimed in claim 11, further comprising:
configuring various identification codes for the subsequent lamp modules
according to the configuring signal until the lamp modules connected in series are all configured.

13. The control method as claimed in claim 11, further comprising:
receiving a control signal;
decoding the control signal according to the first identification code to obtain a
brightness information corresponding to the specific lamp module; and controlling brightness of the lamp of the specific lamp module according to
the brightness information.

14. The control method as claimed in claim 11, wherein the lamp modules are connected in series to form a loop.

15. The control method as claimed in claim 11, wherein the first identification code comprises a protocol addresses.
